# EUROPÄISCHE PATENTSCHRIFT

(11) **EP 2 975 003 B1**
(45) Veröffentlichungstag und Bekanntmachung des Hinweises auf die Patenterteilung: **03.05.2017**
(21) Anmeldenummer: 15174283.0
(22) Anmeldetag: 29.06.2015
(51) Int. Cl.: C02F 1/46

(54) **ENTKALKUNGSVORRICHTUNG IN EINEM TRINKWASSERSYSTEM FÜR DIE BORDVERSORGUNG VON LUFTFAHRZEUGEN**
DESCALING DEVICE IN A DRINKING WATER SYSTEM FOR THE ON-BOARD SUPPLY OF AIRCRAFT
DISPOSITIF DE DETARTRAGE DANS UN SYSTEME D'EAU POTABLE POUR L'ALIMENTATION A BORD D'UN AERONEF

(30) Priorität: 16.07.2014 DE 102014109997
(43) Veröffentlichungstag der Anmeldung: 20.01.2016
(73) Patentinhaber: Airbus Operations GmbH, 21129 Hamburg (DE); Grünbeck Wasseraufbereitung GmbH, 89420 Höchstädt a.d. Donau (DE)
(72) Erfinder: Becker, Ole, 21129 Hamburg (DE); Reiss, Matthias, 21129 Hamburg (DE); Flashaar, Sebastian, 21129 Hamburg (DE); Willbold, Hans, 89264 Weißenhorn (DE); Meinardus, Martin, 89231 Neu-Ulm (DE)
(74) Vertreter: Lorenz & Kopf PartG mbB Patentanwälte, LKGLOBAL

(56) Entgegenhaltungen:
- EP-A1- 2 500 321
- WO-A1-2013/041607
- DE-A1- 10 349 158
- US-A1- 2005 173 242

## Beschreibung

### GEBIET DER ERFINDUNG

Die vorliegende Erfindung betrifft ein Trinkwassersystem, das eine Entkalkungsvorrichtung aufweist, für die Bordversorgung von Luftfahrzeugen, insbesondere von Flugzeugen.

### HINTERGRUND DER ERFINDUNG

Bei der Wasserversorgung treten Probleme bei den Geräten und den Leitungen häufig aufgrund einer Kalkbildung bzw. Kalkablagerung auf. Derartige Ablagerungen bzw. Kalkablagerungen treten insbesondere bei Einrichtungen auf, die eine Heizfunktion aufweisen, beispielsweise Kaffeemaschinen, Wasserkocher, Kücheneinrichtungen, beheizbaren Ventilen, sowie andere Heizeinrichtungen des Trinkwassersystems. Die in diesem Zusammenhang auftretenden Wartungsarbeiten sind zeit- und arbeitsintensiv und führen folglich zu hohen Betriebskosten des Betreibers. Dies ist besonders relevant für Fahrzeuge, insbesondere Luftfahrzeuge, bei denen der Wartungsaufwand besonders hoch ist.

Bei einer Wasserversorgung mit Trinkwasser an Bord eines Fahrzeugs, insbesondere eines Luftfahrzeuges, wird das Trinkwasser üblicherweise in Trinkwasserreservoirs bzw. Speichertanks gelagert. Von dort wird das Wasser entweder über Pumpen oder Schwerkraftgetriebe durch die Leitungen des Fahrzeugs geführt. Die Wasserabnahmestellen sind üblicherweise in Küchen bzw. Waschräumen angeordnet, können jedoch auch singulär angeordnete Vorrichtungen sein. Derartige Wasserabnahmestellen können beispielsweise Waschbecken, Trinkbrunnen, Kaffeemaschinen, Wasserkocher, Dampföfen bzw. Toiletteneinheiten sein. Üblicherweise wird das Wasser, welches in den Trinkwassertanks gespeichert ist, ohne eine weitere Entkalkungsbehandlung im Bordnetz des Fahrzeugs verteilt. Dies kann jedoch zu ernsthaften Verkalkungen der Leitungen führen, insbesondere zu Verkalkungen von Ventilen, T-Stücken, Krümmungen oder Öffnungen, sowie den angeschlossenen Wasserentnahmestellen. Insbesondere wenn an den Wasserentnahmestellen eine Heizung vorgesehen ist, kann die Verkalkung schnell zu einer Fehlfunktion und einer verminderten Leistung führen, ebenso wie zu einer verkürzten Lebensdauer der entsprechenden Einrichtungen.
Die EP 2 500 321 A1 beschreibt ein Verfahren zum Betrieb einer elektrolytischen Wasserbehandlungsvorrichtung. Jedoch beschreibt die EP 2 500 321 A1 kein Trinkwassersystem für ein Luftfahrzeug.

Die Druckschrift DE 103 49 158 A1 hat ein Trinkwassersystem für Luftfahrzeuge zum Gegenstand, das eine nicht näher beschriebene Entkalkungseinheit enthalten kann.

### ZUSAMMENFASSUNG DER ERFINDUNG

Es kann daher als eine Aufgabe der Erfindung betrachtet werden, eine verbesserte Wasserversorgung zur Verfügung zu stellen, die eine geringere Wartungsintensität bzw. eine verlängerte Lebensdauer aufweist.

Die Aufgabe wird gelöst durch den Gegenstand der unabhängigen Ansprüche, Weiterbildungen der Erfindung werden durch die abhängigen Ansprüche verkörpert.Erfindungsgemäß wird ein Trinkwassersystem bereitgestellt, das eine Durchlaufentkalkungsvorrichtung mit einem Wassereinlass, einem ersten Wasserauslass, einer Steuerungsvorrichtung, einer Wasserentkalkungsvorrichtung und einer Spannungs- bzw. Strom-Erfassungsvorrichtung zur Erfassung einer Treiberspannung bzw. eines Treiberstroms zum Betreiben der Wasserentkalkungsvorrichtung aufweist, wobei die Steuerungsvorrichtung ausgelegt ist, bei einem Erfassen einer Treiberspannung bzw. eines Treiberstroms außerhalb eines vorbestimmten Schwellwertbereiches eine notwendige Wartung zu signalisieren.

Auf diese Weise kann eine Wasserentkalkungsvorrichtung einer Durchlaufentkalkungsvorrichtung überwacht werden und anhand der Spannungs- bzw. Stromwerte ermittelt werden, welchen Zustand die Wasserentkalkungsvorrichtung aufweist. Da es nicht nur in den Leitungen und Einrichtungen des Wasserversorgungssystems im Allgemeinen zu einer Kalkablagerung kommen kann, sondern insbesondere auch in der Wasserentkalkungsvorrichtung selbst, ist es sinnvoll, den Zustand der Wasserentkalkungsvorrichtung zu überwachen und rechtzeitig festzustellen, ob und in welchem Umfang eine Verkalkung der Wasserentkalkungsvorrichtung vorliegt. Hat die Verkalkung einen gewissen Grad erreicht, so ist die Effizienz der Wasserentkalkungsvorrichtung mitunter beeinträchtigt, so dass diese wieder instandgesetzt werden bzw. regeneriert werden muss. Bei einer Entkalkung beispielsweise setzt sich Kalk an den entsprechenden Stellen ab, so dass beispielsweise eine Wärmeabfuhr über das durchfließende Wasser nicht mehr in dem Maße erfolgt, so dass die Temperatur der Wasserentkalkungsvorrichtung mitunter ansteigt. Dies führt zu einem veränderten Widerstand der Wasserentkalkungsvorrichtung, so dass diese beispielsweise bei einer eingeprägten Spannung zu einer veränderten Stromaufnahme bzw. bei einem eingeprägten Strom zu einer veränderten Spannung führt. Weicht der Spannungs- bzw. Stromwert ab, so dass er außerhalb eines vorbestimmten Schwellwertbereiches liegt, so kann daraus geschlossen werden, dass eine Wasserentkalkungsvorrichtung regeneriert werden muss. Eine Regenerierung kann dabei nicht nur aufgrund einer Verkalkung notwendig werden, sondern auch aufgrund anderer Phänomene, die eine weitere Wasserentkalkung verhindern bzw. ineffizienter machen.

Die Wasserentkalkungsvorrichtung ist ein elektrolytischer Kalkabscheider.

Auf diese Weise kann eine effiziente Entkalkung um Durchflussbetrieb vorgenommen werden. Ein elektrolytischer Kalkabscheider erzeugt dabei anstelle von Ablagerungen bzw. Kalkablagerungen Mikrokristalle, die in einer Größe verbleiben, die den Fluss im Wassersystem im Wesentlichen nicht beeinträchtigen und sich auch nicht ablagern. Ein derartiges Prinzip ist beispielsweise beschrieben in WO 2005/087669 A1 für die Anwendung in Haushaltsbereichen, das heißt für den stationären Betrieb.

Gemäß einer Ausführungsform ist die Durchlaufentkalkungsvorrichtung ferner mit einer Erfassungsvorrichtung versehen zur Erfassung von Wasserparametern in einem Wasserfluss vom Wassereinlass zu dem wenigstens einen Wasserauslass, wobei die Wasserentkalkungsvorrichtung eine steuerbare Wasserentkalkungsvorrichtung ist, wobei die Steuerungsvorrichtung ausgelegt und eingerichtet ist, um die Wasserentkalkungsvorrichtung auf der Grundlage von wenigstens einem von der Erfassungsvorrichtung erfassten Wasserparameter anzusteuern.

Auf diese Weise kann die Wasserentkalkungsvorrichtung gesteuert betrieben werden und den Entkalkungsgrad gemäß den Eigenschaften des zu entkalkenden Wassers anpassen. Insbesondere muss die Wasserentkalkungsvorrichtung nicht stärker angesteuert werden und ein größeres Maß an Energie aufnehmen, wenn dies das zu entkalkende Wasser nicht erfordert. Auf diese Weise kann sich die Durchlaufentkalkungsvorrichtung auf die unterschiedlichen Zustände des zu entkalkenden Wassers einstellen und eine entsprechend angepasste Wasserentkalkung vornehmen.

Gemäß einer Ausführungsform ist die Erfassungsvorrichtung zur Erfassung von Wasserparametern ausgelegt, insbesondere wenigstens einen der Wasserparameter zu erfassen aus der Gruppe, die besteht aus Wasserhärte, Wasserleitfähigkeit, Wasserdurchflussrate, Wassertemperatur und pH-Wert.

Auf diese Weise können die üblichen Wasserparameter, die relevant sind für Kalkablagerungen, ermittelt werden, so dass mit der Wasserentkalkung den Ursachen entgegengewirkt werden kann, die hauptsächlich für eine Verkalkung verantwortlich sind.

Gemäß einer Ausführungsform weist die Steuerungsvorrichtung einen Datenspeicher auf, der ausgelegt ist vorbestimmte Wasserparameter zu speichern, wobei die Steuerungsvorrichtung ausgelegt und eingerichtet ist, um die Wasserentkalkungsvorrichtung auf der Grundlage von wenigstens einem gespeicherten vorbestimmten Wasserparameter anzusteuern.

Auf diese Weise können bestimmte Wasserparameter auch voreingespeichert werden, wenn beispielsweise eine gewisse Eigenschaft des Wassers vorher bekannt ist. Auf diese Weise kann eine entsprechende Erfassungsvorrichtung eingespart werden, da ein ohnehin bekannter Wasserparameter nicht mehr erfasst werden muss. Bei einer mobilen Einheit ist dies insbesondere in Bereich der Luftfahrt bezüglich der Gewichtseinsparung relevant, da nur solche Erfassungsvorrichtungen vorgesehen sein müssen, die Wasserparameter ermitteln, die eine gewisse Variabilität aufweisen.

Gemäß einer Ausführungsform ist der wenigstens eine gespeicherte Wasserparameter wenigstens ein Wasserparameter aus der Gruppe, die besteht aus Wasserhärte, Wasserleitfähigkeit, Wasserdurchflussrate, Wassertemperatur und pH-Wert.

Auf diese Weise können einer bzw. mehrere von den für die Kalkablagerungen verantwortlichen Wasserparameter voreingestellt werden, wenn diese beispielsweise bekannt sind.

Es sei dabei verstanden, dass beispielsweise verschiedene Wasserparameter in dem Datenspeicher abgelegt werden können und zugleich jedoch eine Erfassung der Wasserparameter erfolgen kann, so dass eine entsprechende Veränderung der Ansteuerung dann vorgenommen werden kann, wenn der erfasste Wasserparameter von einem voreingestellten und gespeicherten Wasserparameter im Datenspeicher abweicht. Auf diese Weise kann der Datenspeicher nicht nur herangezogen werden, um eine entsprechende Ansteuerung der Wasserentkalkungsvorrichtung vorzunehmen, sondern auch um entsprechende Schwellwerte abzuspeichern, auf deren Grundlage die Steuerungsvorrichtung die Wasserentkalkungsvorrichtung ansteuert.

Gemäß einer Ausführungsform ist die Steuerungsvorrichtung ausgelegt, bei einem Erfassen einer Spannung bzw. einem Strom oberhalb eines vorbestimmten Schwellwertes eine Spannung bzw. einen Strom unterhalb dieses Schwellwertes einzustellen, um eine Elektrolyse des Wassers zu vermeiden.

Auf diese Weise kann vermieden werden, dass sich das Wasser aufgrund einer Elektrolyse zersetzt, so dass insbesondere die Bildung von Knallgas in einem Wassersystem unterbunden werden kann. Insbesondere für den Einsatz in Luftfahrzeugen ist dies aus sicherheitstechnischen Gründen wünschenswert, um eine daraus resultierende Explosionsgefahr zu vermeiden. Dabei kann beispielsweise als Grenzwert für die Spannung ein Grenzwert von 2,6 Volt ± 0,2 Volt, insbesondere ± 1 Volt als Grenze für die Elektrolyse zur Vermeidung von Knallgaserzeugung eingestellt sein.

Gemäß einer Ausführungsform weist die Durchlaufentkalkungsvorrichtung ferner ein Additivreservoir und eine Zuführvorrichtung auf, die ausgelegt ist, dem Wasserfluss ein Additiv zuzuführen, wobei das Additivreservoir mit der Zuführvorrichtung verbunden ist.

Auf diese Weise können beispielsweise Inhibitoren, insbesondere Phosphate beigemischt werden, die eine weitere Verkalkung unterbinden oder zumindest reduzieren. Als Additiv kann ferner auch eine Säure bzw. ein Säurebildner zugeführt werden, um beispielsweise schon erzeugte Kalkablagerungen wieder aufzulösen. Es sei dabei verstanden, dass die zugefügten Additive immer im Bereich der Grenzwerte gehalten werden müssen, die für Trinkwasser eingehalten werden müssen. Jedoch können diese auch erhöht werden, wenn sich beispielsweise die gesamte Einrichtung in einem Reinigungszyklus befindet, und sichergestellt werden kann, dass die im Reinigungszyklus befindliche Flüssigkeit nicht in den Trinkwasserkreislauf gerät.

Gemäß einer Ausführungsform ist die Zuführvorrichtung steuerbar und die Steuerungsvorrichtung ausgelegt, die Zuführvorrichtung auf der Grundlage von erfassten Wasserparametern und gespeicherten Wasserparametern zu steuern.

Auf diese Weise kann eine angepasste Zuführung von Additiven erfolgen, so dass eine effiziente Beisteuerung und Zuführung von Additiven erreicht werden kann.

Gemäß einer Ausführungsform ist die Erfassungsvorrichtung zur Erfassung von Wasserparameter stromaufwärts der Wasserentkalkungsvorrichtung angeordnet. Auf diese Weise kann erreicht werden, dass die Erfassungswerte nicht durch den Entkalkungsvorgang beeinflusst werden, so dass es zu keiner Fehlsteuerung im Entkalkungsvorgang kommt.

Gemäß einer Ausführungsform ist die Durchlaufentkalkungsvorrichtung ferner mit einer Spül-/Regenerierungsleitung versehen, die hinter der Wasserentkalkungsvorrichtung und vor der Wasserentkalkungsvorrichtung jeweils abzweigt.

Auf diese Weise kann ein kleiner Kreislauf gebildet werden aus der Wasserentkalkungsvorrichtung und der Spül-/Regenerierungsleitung. In der Spül-/Regenerierungsleitung bzw. in dem kleinen Regenerierungskreislauf kann insbesondere eine Pumpe zur Umwälzung im iterierenden Kreislauf der Spül-/Regenerierungsleitung und der Wasserentkalkungsvorrichtung vorgesehen sein, um eine Regenerierung bzw. eine Beaufschlagung mit einer Regenerierflüssigkeit in diesem Kreislauf zu halten. Darüber hinaus kann beispielsweise eine Zuführung einer Regenerierflüssigkeit vorgesehen sein, die im Kreislaufbetrieb die Regenerierung bzw. die Entfernung von Kalkablagerungen in der Wasserentkalkungsvorrichtung begünstigt. Dabei sei verstanden, dass das Wasser in dem Regenerierungskreislauf sowohl vorwärtig als auch rückwärtig die Wasserentkalkungsvorrichtung durchfließen kann. Ferner kann beispielsweise eine Drainage im Kreislauf von Spül-/Regenerierungsleitung und Wasserentkalkungsvorrichtung vorgesehen sein, um die Regenerierflüssigkeit abzuführen bzw. den Kreislauf zu spülen, bevor eine Beschickung mit Trinkwasser erfolgt.

Das Trinkwassersystem weist ein Wasserreservoir, wenigstens einen Verbraucheranschluss zur Wasserentnahme, und eine oben beschriebenen Durchlaufentkalkungsvorrichtung auf, wobei das Wasserreservoir mit dem Wassereinlass der Durchlaufentkalkungsvorrichtung verbunden ist, wobei der Verbraucheranschluss mit wenigstens einem Wasserauslass der Durchlaufentkalkungsvorrichtung verbunden ist.

Auf diese Weise kann ein Trinkwassersystem mit einer oben beschriebenen Durchlaufentkalkungsvorrichtung bereitgestellt werden, wobei das Trinkwassersystem eine Wasserversorgung in einem Luftfahrzeug bereitstellt. Gemäß einer Ausführungsform kann eine Reservoirdruckerzeugungsvorrichtung vorgesehen sein, die ausgelegt ist, um das Wasserreservoir mit einem Druck zu beaufschlagen.

Auf diese Weise kann der im Wasserreservoir vorherrschende Druck benutzt werden, um das Wasser in dem Trinkwassersystem zu fördern, insbesondere um das Trinkwasser von dem Reservoir durch die Durchlaufentkalkungsvorrichtung zu den Wasserentnahmestellen zu liefern.

Gemäß einer Ausführungsform kann eine Leitungsdruckerzeugungsvorrichtung vorgesehen sein, um einen Förderdruck stromabwärts des Wasserreservoirs zu erzeugen.

Auf diese Weise kann das Wasserreservoir selbst im Wesentlichen drucklos gehalten werden, so dass eine Wasserförderung durch beispielsweise eine Leitungspumpe im Leitungssystem erzeugt werden kann.

Gemäß einer Ausführungsform weist das Trinkwassersystem eine erste Rückführleitung auf, wobei die erste Rückführleitung den Verbraucheranschluss mit dem Wasserreservoir derart verbindet, dass nicht vom Wasserverbraucher abgenommenes Wasser vom Wasserreservoir über die Durchlaufentkalkungsvorrichtung und die erste Rückführleitung in das Wasserreservoir zurückgeführt werden kann.

Auf diese Weise kann zum einen das Wasser zirkulierend gehalten werden, so dass keine Ablagerungen aufgrund eines stehenden Wassers in einer Leitung erfolgen, zum anderen kann auch eine kontinuierliche Entkalkung des Reservoirinhaltes erfolgen, insbesondere wenn kein Wasser von den Wasserentnahmestellen abgenommen wird.

Gemäß einer Ausführungsform weist die Durchlaufentkalkungsvorrichtung stromabwärts des Wassereinlasses eine Verzweigung in einen ersten Wasserpfad und einen zweiten Wasserpfad auf, wobei der erste Wasserpfad über die Zuführvorrichtung mit dem ersten Wasserauslass verbunden ist, und wobei der zweite Wasserpfad über die Wasserentkalkungsvorrichtung mit einem zweiten Wasserauslass verbunden ist, wobei eine zweite Rückführleitung den zweiten Wasserauslass mit dem Wasserreservoir derart verbindet, dass Wasser vom Wasserreservoir über die Wasserentkalkungsvorrichtung und die zweite Rückführleitung in das Wasserreservoir zurückgeführt werden kann.

Auf diese Weise kann das Wasser aus dem Reservoir zum einen in Richtung der Wasserabnahmestellen gefördert werden, und dabei mit einem Additiv versehen werden, beispielsweise mit einer Säure bzw. mit einem Inhibitor zur Vermeidung einer Kalkablagerung. Zum anderen kann das Wasser aus dem Reservoir über einen anderen Wasserpfad über eine Wasserentkalkungsvorrichtung, insbesondere einen elektrolytischen Kalkabscheider, entkalkt werden und in das Wasserreservoir zurückgeführt werden. Auf diese Weise kann eine kontinuierliche Entkalkung des Wassers im Wasserreservoir vorgenommen werden, und zwar parallel zu der Möglichkeit, Wasser an die Wasserverbrauchsstellen zu führen.

Gemäß einer Ausführungsform ist die Durchlaufentkalkungsvorrichtung bzw. die Wasserentkalkungsvorrichtung in dem Trinkwassersystem austauschbar ausgeführt.

Auf diese Weise kann entweder die Wasserentkalkungsvorrichtung oder die gesamte Durchlaufentkalkungsvorrichtung mit den weiteren Aggregaten zu Wartungszwecken entnommen werden und entweder unmittelbar durch eine andere Wasserentkalkungsvorrichtung bzw. Durchlaufentkalkungsvorrichtung ersetzt werden, die bereits regeneriert ist, oder regeneriert werden und wieder eingesetzt werden. So kann beispielsweise die Wasserentkalkungsvorrichtung regeneriert werden, ohne dass diese dabei in dem Fahrzeug, insbesondere in dem Luftfahrzeug verbleiben muss.

Gemäß einer Ausführungsform ist das Trinkwassersystem mit einer Mehrzahl von Durchlaufentkalkungsvorrichtungen versehen, wie oben beschrieben, wobei der Wassereinlass von jeder der Mehrzahl von Durchlaufentkalkungsvorrichtungen jeweils mit dem Wasserreservoir verbunden ist und der erste Wasserauslass jeweils von jeder der Mehrzahl von Durchlaufentkalkungsvorrichtungen mit jeweils einem Wasserverbraucheranschluss verbunden ist.

Auf diese Weise kann eine Durchlaufentkalkungsvorrichtung auch dezentral an einer einzelnen Wasserentnahmestelle vorgesehen sein oder einer Gruppe von Wasserentnahmestellen.

Darüber hinaus sei verstanden, dass modular eine Mehrzahl von Durchlaufentkalkungsvorrichtungen bzw. Wasserentkalkungsvorrichtungen parallel vorgesehen sein können, die auch modular ausgetauscht werden können. Die Anzahl der parallelen Vorrichtungen kann sich dann nach der maximalen Menge des zu entnehmenden Wassers beim Verbraucher richten. Die Durchlaufentkalkungsvorrichtung bzw. die Wasserentkalkungsvorrichtung kann beispielsweise so eingerichtet sein, dass sie mit Energieversorgungsunterbrechungen umgehen kann, beispielsweise durch die Möglichkeit eines automatischen Wiederstartens nach einem Energieausfall oder durch einen Energiepuffer, der eine Entkalkung auch bei einem kurzfristigen Energieausfall sicherstellt. Darüber hinaus kann die Wasserentkalkungsvorrichtung bzw. die Durchlaufentkalkungsvorrichtung so ausgelegt sein, dass sie den Vibrationsanforderungen in einem Fahrzeug, insbesondere einem Luftfahrzeug, sowie einer Stoßbelastung widerstehen kann. Dies kann beispielsweise durch eine gefederte Aufhängung der empfindlichen Teile erfolgen sowie durch eine flexible Ankopplung im Bereich des Wassereinlasses bzw. des Wasserauslasses, beispielsweise mit flexiblen Schläuchen. Durch die Auswahl von entsprechenden Materialien, insbesondere hitzebeständigen Materialien, kann die Wasserentkalkungsvorrichtung bzw. die Durchlaufentkalkungsvorrichtung so ausgelegt sein, dass sie einen Betrieb zwischen 0 °C und 70 °C erlaubt, bzw. eine Lagerung zwischen -55 °C bis +85 °C erlaubt.

Gemäß einer Ausführungsform wird ein Luftfahrzeug bereitgestellt mit einem Trinkwassersystem wie oben beschrieben, und wenigstens einem Wasserverbraucher, wobei der wenigstens ein Wasserverbraucher mit dem Verbraucheranschluss verbunden ist.

Einzelne Merkmale wie oben beschrieben können selbstverständlich auch untereinander kombiniert werden, wodurch sich zum Teil auch vorteilhafte Wechselwirkungen einstellen können, die über die Summe der Einzelwirkungen hinausgehen.

Diese und andere Aspekte der vorliegenden Erfindung werden durch die Bezugnahme auf die hiernach beschriebenen beispielhaften Ausführungsbeispiele erläutert und verdeutlicht.

### KURZE BESCHREIBUNG DER ZEICHNUNGEN

Beispielhafte Ausführungsformen werden im Folgenden mit Bezugnahme auf die folgenden Zeichnungen beschrieben.
Figur 1 beschreibt eine Durchlaufentkalkungsvorrichtung in einem Trinkwassersystem gemäß einer beispielhaften Ausführungsform der Erfindung.
Figur 2 beschreibt eine Durchlaufentkalkungsvorrichtung in einem Trinkwassersystem mit einer Rückführungsleitung gemäß einer beispielhaften Ausführungsform der Erfindung.
Figur 3 beschreibt eine Durchlaufentkalkungsvorrichtung in einem Trinkwassersystem mit einem ersten und einem zweiten Wasserpfad gemäß einer beispielhaften Ausführungsform der Erfindung.
Figur 4 beschreibt Mehrzahl von Durchlaufentkalkungsvorrichtungen in einem Trinkwassersystem gemäß einer beispielhaften Ausführungsform der Erfindung.
Figur 5 beschreibt ein Trinkwassersystem in einem Luftfahrzeug gemäß einer beispielhaften Ausführungsform der Erfindung.

### DETAILLIERTE BESCHREIBUNG BEISPIELHAFTER AUSFÜHRUNGSFORMEN

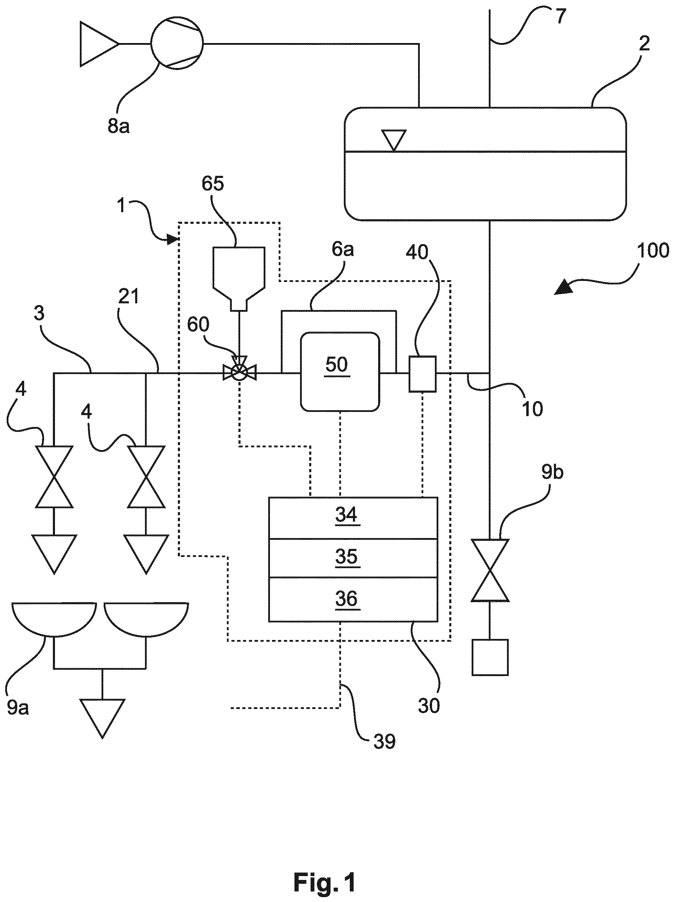

Figur 1 zeigt ein Trinkwassersystem mit einer Durchlaufentkalkungsvorrichtung 1, die in Figur 1 in dem gestrichelten Bereich abgegrenzt ist. Das Trinkwassersystem 100 weist ein Wasserreservoir 2 auf, welches einen Wasservorrat des Trinkwassersystems 100 beinhaltet. Das Reservoir weist einen Wasseranschluss auf, der von dem Reservoir zu einem Wassereinlass 10 der Durchlaufentkalkungsvorrichtung 1 führt. Die Durchlaufentkalkungsvorrichtung 1 weist einen Wasserauslass 21 auf, der zu einem Verbraucheranschluss 3 führt. An den Verbraucheranschluss 3 können Wasserverbraucher 4 angeschlossen werden, die beispielsweise ein Trinkbrunnen, ein Waschbecken oder ein anderer Wasserverbraucher sein können. Das von dem Wasserverbraucher 4 konsumierte Wasser kann, sofern ein Abwasser entsteht, durch einen Wasserablauf 9a in einen Abwassertank geleitet werden. Das Trinkwassersystem 100 weist ferner die Möglichkeit einer Trinkwassersystementwässerung 9b auf, mittels der das Reservoir und auch die verbleibenden Leitungen des Trinkwassersystems 100 entwässert werden können, wenn beispielsweise Wartungsarbeiten durchgeführt werden sollen. Das Reservoir ist ferner mit einer Öffnung 7 versehen, die beispielsweise der Belüftung dienen kann, wenn Wasser entnommen wird, so dass im Reservoir kein Unterdruck entsteht. Darüber hinaus kann die Öffnung 7 auch zur Befüllung des Wasserreservoirs 2 verwendet werden. Es sei verstanden, dass die Befüllung des Wassersystems auch rückwärtig, beispielsweise über die Entwässerungsleitung 9b erfolgen kann. In der hier gezeigten Ausführungsform ist das Reservoir mittels einer Wasserreservoirdruckbeaufschlagung 9a, hier in Form einer Luftpumpe, mit einem Druck beaufschlagbar, so dass der im Reservoir vorherrschende Druck, insbesondere die komprimierte Luft im Luftbereich des Reservoirs den Vortrieb des Wassers aus dem Reservoir in das Trinkwassersystem 100 bereitstellen kann. In diesem Fall muss die Belüftungsöffnung 7 selbstverständlich verschlossen werden, so dass der Antriebsdruck im Reservoir nicht entweichen kann.

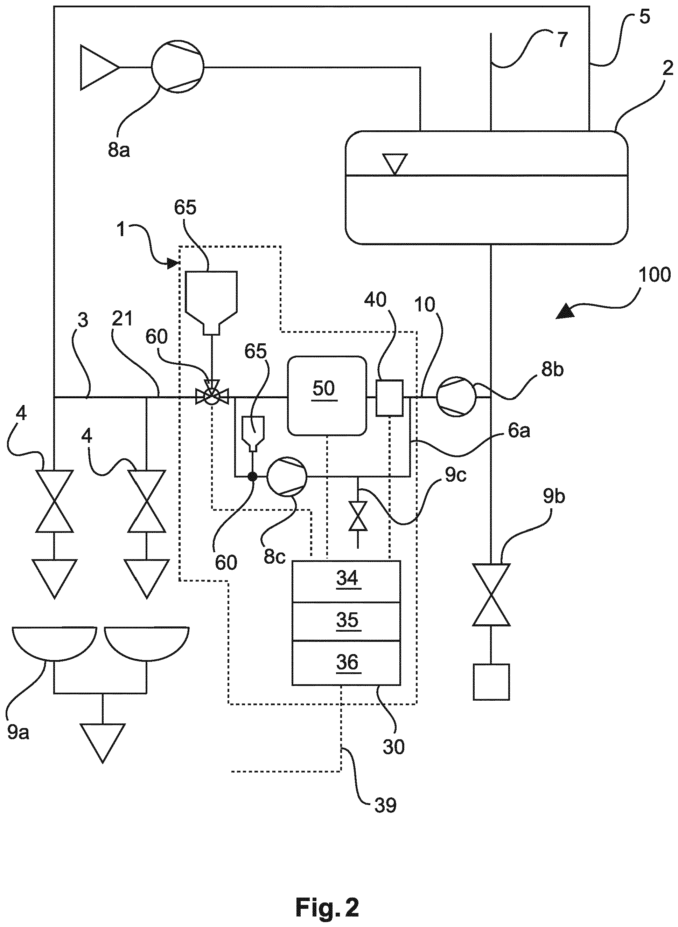

Die Durchlaufentkalkungsvorrichtung 1 weist in der in Figur 1 gezeigten Ausführungsform eine Wasserentkalkungsvorrichtung 50 auf, die in Form eines elektrolytischen Kalkabscheiders ausgeführt ist. Der elektrolytische Kalkabscheider 50 ist mit einer Steuerungsvorrichtung 30 verbunden, die beispielsweise die Wasserentkalkungsvorrichtung 50 ansteuert. Dabei kann ferner eine Erfassungsvorrichtung 40 vorgesehen sein zur Erfassung von Wasserparametern. Diese Erfassungsvorrichtung 40 kann beispielsweise stromaufwärts der Wasserentkalkungsvorrichtung 50 vorgesehen sein. Darüber hinaus kann beispielsweise ein Additivreservoir 65 vorgesehen sein, welches mit einer Zuführvorrichtung 60 verbunden ist, die beispielsweise gesteuert ein Additiv aus dem Additivreservoir 65 der Wasserleitung zusetzen kann. Diese Zuführvorrichtung 60 kann dabei beispielsweise über die Steuerungsvorrichtung 30 gesteuert werden. Darüber hinaus kann eine Spül-/Regenerierungsleitung 6a vorgesehen sein, die es ermöglicht, mit der Wasserentkalkungsvorrichtung 50 einen kleinen Kreislauf zu bilden, so dass innerhalb dieses Kreislaufes eine Regenerierung der Wasserentkalkungsvorrichtung 50 vorgenommen werden kann. Dabei kann dieser Kreislauf grundsätzlich in beiden Richtungen durchflossen werden. Wie später mit Bezugnahme auf Figur 2 noch beschrieben wird, kann in dem Kreislauf der Spül-/Regenerierungsleitung 6a und der Wasserentkalkungsvorrichtung 50 eine Pumpe vorgesehen sein, die eine Zirkulation in diesem Kreislauf hervorruft. Ferner kann auch dort ein Additivreservoir 65 vorgesehen sein, das über eine Zuführvorrichtung 60 eine Regenerierflüssigkeit in den Regenerierungskreislauf einspeisen kann. Ferner kann in der Spül-/Regenerierungsleitung 6a ein Drainageventil vorgesehen sein, um die Flüssigkeit, insbesondere eine Regenerierflüssigkeit, in dem Regenerierungskreislauf abzulassen.

Die Steuerungsvorrichtung 30 kann beispielsweise einen Prozessor 34 aufweisen, der die Ansteuerung der Wasserentkalkungsvorrichtung 50 vornimmt. Dabei kann der Prozessor 34 beispielsweise auf Daten zurückgreifen, die in einem Datenspeicher 35 gespeichert sind. Diese Daten können beispielsweise voreingestellte Wasserparameter sein, beispielsweise eine Wasserhärte, ein pH-Wert, eine Wasserleitfähigkeit, bzw. eine Wasserdurchflussrate, wenn diese beispielsweise als konstant vorausgesetzt wird. Auf der Grundlage dieser Daten kann der Prozessor 34 die Wasserentkalkungsvorrichtung 50 ansteuern. Darüber hinaus kann die Steuerungsvorrichtung 30 eine Spannungs-/Stromüberwachungseinheit aufweisen, mit der die Ansteuerungsspannung bzw. der Ansteuerungsstrom der Wasserentkalkungsvorrichtung 50 überwacht wird. Die Wasserentkalkungsvorrichtung 50 kann beispielsweise ihren Zustand verschlechtern, beispielsweise durch Kalkablagerungen oder durch andere Defekte, so dass sich eine Betriebsspannung bzw. ein Betriebsstrom aus einem vorbestimmten Schwellwertbereich hinaus bewegt, so dass die Steuerungsvorrichtung 30 daran erfassen kann, dass eine Wartung der Wasserentkalkungsvorrichtung 50 oder der gesamten Durchlaufentkalkungsvorrichtung 1 notwendig ist. So kann beispielsweise durch eine Verkalkung der Wasserentkalkungsvorrichtung 50 eine Wärmeabfuhr innerhalb der Wasserentkalkungsvorrichtung 50 gehemmt sein, so dass die Temperaturen ansteigen und sich dadurch die elektrischen Eigenschaften bezüglich der Stromaufnahme bzw. des Spannungsabfalls ändern können, so dass eine derartige Veränderung der Wasserentkalkungsvorrichtung 50 durch die Spannungs-/Stromüberwachung 36 in der Steuerungsvorrichtung 30 erkannt werden kann.

Das aus dem Reservoir 2 stammende Wasser kann nun für die Versorgung der Verbraucher 4 in die Durchlaufentkalkungsvorrichtung 1 einfließen. Dies erfolgt über den Wassereinlass 10. Das einfließende Wasser kann beispielsweise überwacht werden über die Erfassungsvorrichtung 40, die beispielsweise Wasserparameter in Form einer Wasserhärte, einer Wasserleitfähigkeit, einer Wasserdurchflussrate, einer Wassertemperatur bzw. eines pH-Wertes erfasst, und diese der Steuerungsvorrichtung 30 zur Verfügung stellt. Auf dieser Grundlage kann nun die Steuerungsvorrichtung 30 die Wasserentkalkungsvorrichtung 50 entsprechend ansteuern. Dabei sei verstanden, dass die in dem Datenspeicher 35 abgelegten Werte mit den erfassten Werten der Erfassungsvorrichtung 40 in Relation gesetzt werden können. So kann beispielsweise die Steuerungsvorrichtung 30 eine Veränderung der Ansteuerung vornehmen, wenn die erfassten Werte von den abgespeicherten Werten signifikant abweichen. Ebenso kann vorgesehen sein, dass die Steuerungsvorrichtung 30 immer dann auf die im Datenspeicher 35 gespeicherten Werte zurückgreift, wenn Werte aus der Erfassungsvorrichtung 40 nicht vorliegen. Es sei verstanden, dass auch nur ausgewählte oder einzelne Wasserparameter durch die Erfassungsvorrichtung 40 erfasst werden können, wenn sich beispielsweise dadurch eine Gewichtsersparnis ergibt, die für den Einsatz im Luftfahrtbereich relevant ist. So können beispielsweise auch die Zudosiereinheit, insbesondere das Additivreservoir 65 und die Zuführvorrichtung 60 modular ausgeführt sein, und zwar sowohl innerhalb des Regenerierungskreislaufes (siehe Figur 2) als auch im Versorgungskreislauf. Im Übrigen kann auch eine entsprechende Sensorik vorgesehen sein, die beispielsweise überwacht, ob eine Regenerierung zuverlässig und zufriedenstellend ausgeführt wurde.

Es sei verstanden, dass je nach Erfordernissen auch eine Mehrzahl von Durchlaufentkalkungsvorrichtungen vorgesehen sein kann, die parallel geschaltet sind, so dass eine größere Menge Wasser parallel entkalkt werden kann. Obgleich nicht in Figur 1 und auch in den anderen Figuren nicht gezeigt, sei verstanden, dass an entsprechenden Abzweigungen von Leitungen entsprechende Ventile, insbesondere in Form von Rückschlagventilen oder steuerbaren Ventilen vorgesehen sein können, die die entsprechenden Kreisläufe so einrichten, dass deren Funktion im Wesentlichen nicht beeinträchtigt wird. Insbesondere kann durch entsprechend vorgesehene Ventile sichergestellt werden, dass beispielsweise eine Regenerierflüssigkeit im Regenerierungskreislauf nicht in den Wasserkreislauf gelangt.

Ferner können auch entsprechende Vorrichtungen und Einrichtungen vorgesehen sein, dass die Wasserentkalkungsvorrichtung 50 bzw. die Durchlaufentkalkungsvorrichtung 1 bei einem Energieausfall weiter betrieben werden können, beispielsweise durch das Vorsehen eines Energiespeichers. Darüber hinaus kann die Steuerung selbstverständlich so ausgelegt sein, dass diese nach einem Energieausfall automatisch ihren Betrieb wieder aufnimmt. Ebenso kann die Wasserentkalkungsvorrichtung 50 bzw. die Durchlaufentkalkungsvorrichtung 1 mit Vibrationsdämpfungselementen ausgestattet sein, so dass diese entsprechenden Vibrationen insbesondere beim Einsatz bei Luftfahrzeugen widerstehen kann.

Ferner kann eine Bedieneinheit vorgesehen sein (nicht gezeigt), über die ein Benutzer beispielsweise informiert werden kann, welcher Wartungszyklus zu erwarten ist, bzw. welchen Zustand die Wasserentkalkungsvorrichtung 50 hat. In einer derartigen Einrichtung können beispielsweise auch die Wasserparameter kontinuierlich erfasst und dokumentiert werden, so dass im späteren Fehlerfall eine Ursachenforschung betrieben werden kann. Zu diesem Zweck kann die Steuerungsvorrichtung 30 mit einem Fahrzeugmanagementsystem 39 verbunden werden, so dass die Wasserentkalkung in den Gesamtkontext eines Fahrzeugmanagements eingebunden werden kann. Insbesondere können über ein Fahrzeugmanagementsystem entsprechende Wartungsintervalle überwacht und eingehalten werden und entsprechende Werte betreffend die Wasserentkalkung ausgetauscht werden. Über ein derartiges Fahrzeugmanagementsystem kann beispielsweise auch ein Frostschutz etabliert werden, so dass beispielsweise zusätzliche Frostschutzeinrichtungen, wie etwa eine Heizung aktiviert werden können.

Figur 2 zeigt ein alternatives Ausführungsbeispiel eines Wasserversorgungssystems mit einer Durchlaufentkalkungsvorrichtung 1. Das in Figur 2 gezeigte Trinkwassersystem 100 weist ähnliche Komponenten auf wie bereits in Figur 1 gezeigt. Figur 2 zeigt darüber hinaus eine weitere Druckerzeugungsvorrichtung 8b in Form einer Pumpe, die beispielsweise das aus dem Reservoir stammende Wasser durch die Leitungen zu dem Verbraucher 4 fördert. Es sei verstanden, dass entweder die Pumpe 8a zur Druckerzeugung im Reservoir oder die Pumpe 8b zur Förderung des Wassers in den Leitungen verwendet werden kann. Selbstverständlich kann auch eine Kombination der beiden Pumpen verwendet werden. Die Erfassung und die Ansteuerung der Wasserentkalkungsvorrichtung 50 erfolgt analog zu der in Figur 1 beschriebenen Anordnung. Figur 2 zeigt im Detail eine alternative Ausführungsform einer Spül-/Regenerierungsleitung 6a. Die in Figur 2 gezeigte Spül-/Regenerierungsleitung 6a zweigt dabei vor der Erfassungsvorrichtung 40 ab und hinter der Wasserentkalkungsvorrichtung 50. Auf diese Weise kann mittels der Erfassungsvorrichtung 40 auch ein Wasserparameter erfasst werden, der Aufschluss über eine erfolgreiche Regenerierung geben kann. In der Regenerierungsleitung 6a kann beispielsweise ein weiteres Additivreservoir 65 mit einer Zuführvorrichtung 60 vorgesehen sein, wobei das Additiv in dem Regenerierungskreislauf beispielsweise zur Regenerierung der Wasserentkalkungsvorrichtung 50 verwendet werden kann. Darüber hinaus kann auch in dem Zirkulationskreislauf eine Zirkulationspumpe 8c vorgesehen sein, die dafür sorgt, dass im Zirkulationskreislauf eine Bewegung der Flüssigkeit erfolgt. Zu diesem Zweck können in Figur 2 nicht gezeigte Ventile verhindern, dass eine mit einem Zusatz versetzte Flüssigkeit auch rückwirkend in das Reservoir 2 gelangt, oder auch zu den Verbrauchern 4 gelangt. Weiterhin kann auch eine Entwässerungsvorrichtung 9c vorgesehen sein, über die Wasser im Zirkulationskreislauf abgelassen werden kann. Auf diese Weise kann ein mit einer Reinigungsflüssigkeit versehenes Wasser aus dem Zirkulationskreislauf entfernt werden und eine entsprechende Spülung vorgenommen werden, bevor der Kreislauf für eine weitere Trinkwasserversorgung freigegeben wird. Weiterhin ist in Figur 2 vorgesehen, dass an dem Verbraucheranschluss 3 eine Rückführungsleitung 5 ansetzt, die beispielsweise Wasser, welches nicht von den Verbrauchern 4 entnommen wurde, in das Reservoir 2 zurückführt. Auf diese Weise kann beispielsweise eine kontinuierliche Entkalkung des Wassers im Reservoir 2 vorgenommen werden, insbesondere wenn kein Wasser durch die Verbraucher 4 abgenommen wird.

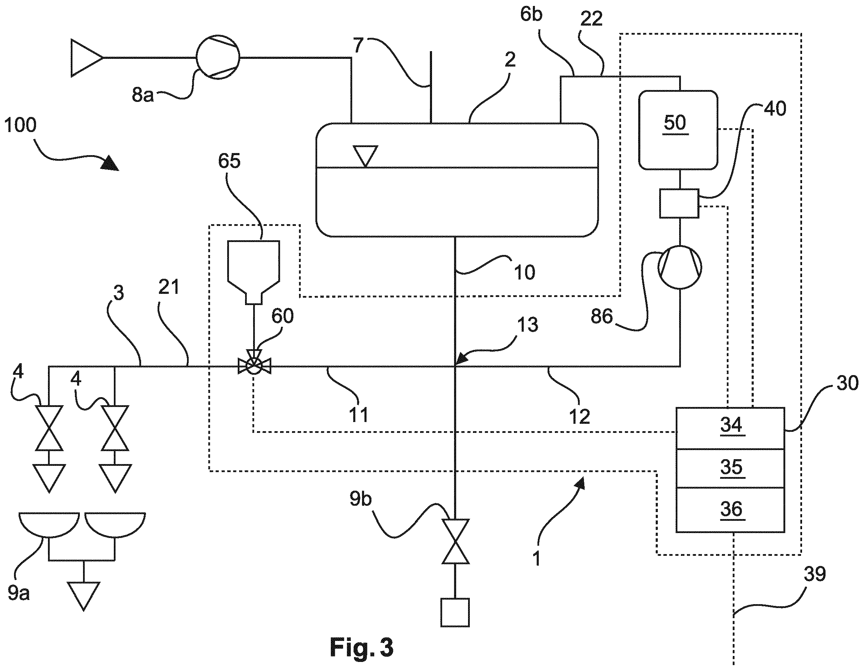

Figur 3 zeigt ein weiteres Ausführungsbeispiel eines Trinkwassersystems 100 mit einer Durchlaufentkalkungsvorrichtung 1. An dem Wassereinlass 10 ist eine Verzweigung 13 vorgesehen, die den Wasserfluss in einen ersten Wasserpfad 11 und ein einen zweiten Wasserpfad 12 aufteilt. Das Wasser im ersten Wasserpfad 11 gelangt beispielsweise zu der Zuführvorrichtung 60, so dass über ein Additivreservoir 65 ein Additiv, beispielsweise ein Inhibitor zur Vermeidung von Kalkbildung bzw. ein Phosphat beigefügt werden kann. Dieses Wasser gelangt dann zu einem ersten Wasserauslass 21, der einen Verbraucheranschluss 3 ermöglicht, über den Verbraucher 4 angeschlossen werden können. Über den zweiten Wasserpfad 12 kann das Wasser zu einer Wasserentkalkungsvorrichtung 50 gelangen, die, wie bereits mit Bezugnahme auf Figur 1 beschrieben wurde, über eine Steuerungsvorrichtung 30 angesteuert werden kann. Zu diesem Zweck kann auch eine Erfassungsvorrichtung 40 vorgesehen sein, die entsprechende Wasserparameter im zweiten Wasserpfad 12 erfassen kann. Über einen zweiten Wasserauslass 22 der Durchlaufentkalkungsvorrichtung 1 kann das Wasser dann über eine zweite Rückführleitung 6b in das Wasserreservoir 2 zurückgeführt werden. Obgleich in Figur 3 lediglich im zweiten Wasserpfad eine Pumpe 8b vorgesehen ist, kann auch in dem ersten Wasserpfad 11 eine Pumpe vorgesehen sein, um das Wasser zu fördern.

Je nach Ausgestaltung des Trinkwassersystems 100 kann das Wasser jedoch auch über die Schwerkraft an die Verbraucher 4 gefördert werden. Bei einer Rückführung des Wassers in das Reservoir ist eine Fördereinrichtung notwendig, die beispielsweise durch eine Pumpe 8b realisiert werden kann.

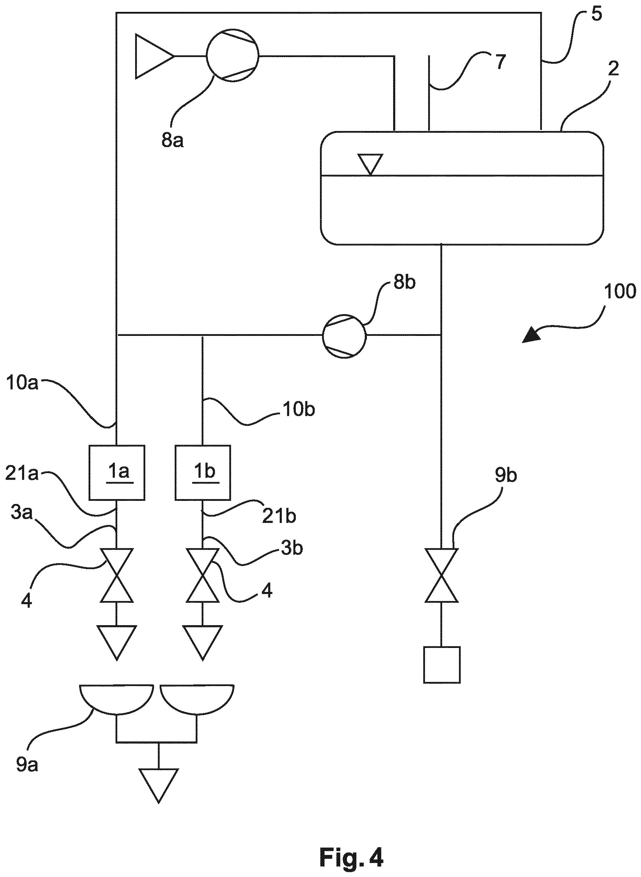

Figur 4 zeigt ein weiteres Ausführungsbeispiel, bei dem eine Durchlaufentkalkungsvorrichtung 1 nicht zentral vorgesehen ist, sondern als dezentrale Einheit 1a, 1b. Dabei ist bei jeder der Durchlaufentkalkungsvorrichtungen 1a, 1b ein entsprechender Wassereinlass 10a, 10b vorgesehen, über den die Durchlaufentkalkungsvorrichtungen 1a, 1b mit Wasser aus dem Reservoir 2 versorgt werden. Über einen entsprechenden Wasserauslass 21a, 21b gelangt das Wasser dann zu entsprechenden Verbraucheranschlüssen 3a, 3b, an die entsprechende Verbraucher 4 angeschlossen werden können. Auch in Figur 4 ist eine Rückführleitung 5 vorgesehen. Dabei sei verstanden, dass bei einem Vorsehen einer Vielzahl von Durchlaufentkalkungsvorrichtungen 1a, 1b nicht zwingend eine Rückführleitung 5 vorgesehen sein muss.

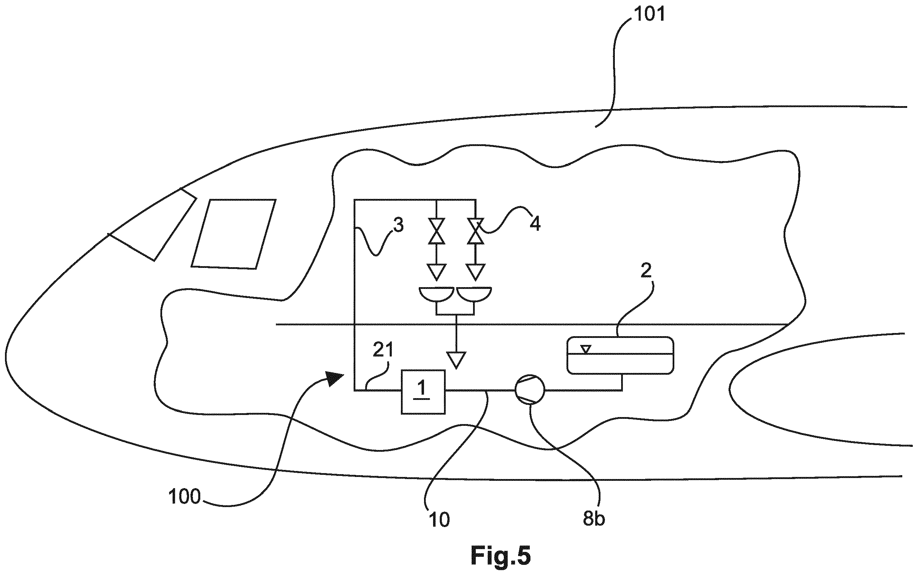

Figur 5 zeigt ein Ausführungsbeispiel eines Luftfahrzeugs mit einem Trinkwassersystem 100. In dem Luftfahrzeug 101 kann dabei ein Trinkwassersystem 100 vorgesehen sein. Das Reservoir 2 kann dabei unterhalb des Kabinenbodens vorgesehen sein, so dass das Wasser aus dem Reservoir 2 durch eine Pumpe 8b an die Durchlaufentkalkungsvorrichtung 1 gefördert werden kann. Über einen entsprechenden Verbraucheranschluss 3 gelangt das Wasser dann zu den entsprechenden Verbrauchern 4.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt. Die verwendeten Bezugszeichen dienen lediglich zur Erhöhung der Verständlichkeit und sollten keinesfalls als einschränkend betrachtet werden, wobei der Schutzbereich der Erfindung durch die Ansprüche wiedergegeben wird.

### Bezugszeichenliste

- 1, 1a, 1b: Durchlaufentkalkungsvorrichtung
- 2: Wasserreservoir
- 3, 3a, 3b: Verbraucheranschluss
- 4: Verbraucher
- 5: erste Rückführleitung
- 6a: Spül-/Regenerierungsleitung
- 6b: zweite Rückführleitung
- 7: Belüftungsöffnung
- 8a: Wasserreservoirdruckbeaufschlagung
- 8b: Leitungsdruckbeaufschlagung
- 9a: Wasserablauf
- 9b: Trinkwassersystementwässerung
- 9c: Zirkulationskreislaufentwässerung
- 10, 10a, 10b: Wassereinlass
- 11: erster Wasserpfad
- 12: zweiter Wasserpfad
- 13: Verzweigung
- 21, 21a, 21b: erster Wasserauslass
- 22: zweiter Wasserauslass
- 30: Steuerungsvorrichtung
- 34: Prozessor
- 35: Datenspeicher
- 36: Spannungs-/Stromüberwachung
- 39: Verbindung zum Fahrzeugmanagementsystem
- 40: Erfassungsvorrichtung zur Erfassung von Wasserparametern
- 50: Wasserentkalkungsvorrichtung
- 60: Zuführvorrichtung
- 65: Additivreservoir
- 100: Trinkwassersystem
- 101: Luftfahrzeug

## Patentansprüche

1. Trinkwassersystem für ein Luftfahrzeug aufweisend
eine Durchlaufentkalkungsvorrichtung (1) mit einem Wassereinlass (10),
einem ersten Wasserauslass (21),
einer Steuerungsvorrichtung (30),
einer Wasserentkalkungsvorrichtung (50),
einer Spannungs- bzw. Strom-Erfassungsvorrichtung (36) zur Erfassung einer Treiberspannung bzw. eines Treiberstroms zum Betreiben der Wasserentkalkungsvorrichtung (50), wobei die Steuerungsvorrichtung (30) ausgelegt ist bei einem Erfassen einer Treiberspannung bzw. eines Treiberstroms außerhalb eines vorbestimmten Schwellwertbereiches eine notwendige Wartung zu signalisieren;
ein Wasserreservoir (2),
wenigstens ein Verbraucheranschluss (3) zur Wasserentnahme,
wobei das Wasserreservoir (2) mit dem Wassereinlass (10) der Durchlaufentkalkungsvorrichtung (1) verbunden ist,
wobei der Verbraucheranschluss (3) mit wenigstens einem Wasserauslass (21) der Durchlaufentkalkungsvorrichtung (1) verbunden ist, und
wobei die Wasserentkalkungsvorrichtung (50) ein elektrolytischer Kalkabscheider ist.

2. Trinkwassersystem gemäß Anspruch 1,
wobei die Durchlaufentkalkungsvorrichtung (1) ferner aufweist:
eine Erfassungsvorrichtung (40) zur Erfassung von Wasserparametern in einem Wasserfluss vom Wassereinlass (10) zu dem wenigstens einen Wasserauslass (21), wobei die Wasserentkalkungsvorrichtung (50) eine steuerbare Wasserentkalkungsvorrichtung ist, wobei die Steuerungsvorrichtung (30) ausgelegt und eingerichtet ist, um die Wasserentkalkungsvorrichtung (50) auf der Grundlage von wenigstens einem von der Erfassungsvorrichtung (40) erfassten Wasserparameter anzusteuern, wobei die Erfassungsvorrichtung (40) zur Erfassung von Wasserparametern ausgelegt ist insbesondere wenigstens einen der Wasserparameter zu erfassen aus der Gruppe, bestehend aus:
- Wasserhärte,
- Wasserleitfähigkeit,
- Wasserdurchflussrate,
- Wassertemperatur,
- pH-Wert.

3. Trinkwassersystem gemäß einem der Ansprüche 1 und 2, wobei die Steuerungsvorrichtung (30) einen Datenspeicher (35) aufweist, der ausgelegt ist vorbestimmte Wasserparameter zu speichern, wobei die Steuerungsvorrichtung (30) ausgelegt und eingerichtet ist, um die Wasserentkalkungsvorrichtung (50) auf der Grundlage von wenigstens einem gespeicherten vorbestimmten Wasserparameter anzusteuern, wobei der wenigstens eine gespeicherte Wasserparameter insbesondere wenigstens ein Wasserparameter ist aus der Gruppe, bestehend aus:
- Wasserhärte,
- Wasserleitfähigkeit,
- Wasserdurchflussrate,
- Wassertemperatur,
- pH-Wert.

4. Trinkwassersystem gemäß einem der Ansprüche 1 bis 3, wobei die Steuerungsvorrichtung (30) ausgelegt ist bei einem Erfassen einer Spannung bzw. einem Strom oberhalb eines vorbestimmten Schwellwertes eine Spannung bzw. einen Strom unterhalb des Schwellwertes einzustellen, um eine Elektrolyse des Wassers zu vermeiden.

5. Trinkwassersystem gemäß einem der Ansprüche 1 bis 4, wobei die Durchlaufentkalkungsvorrichtung (1) ferner aufweist:
ein Additivreservoir (65) und eine Zuführvorrichtung (60), die ausgelegt ist dem Wasserfluss ein Additiv zuzuführen, wobei das Additivreservoir (65) mit der Zuführvorrichtung (60) verbunden ist, wobei die Zuführvorrichtung (60) insbesondere steuerbar ist und die Steuerungsvorrichtung (30) ausgelegt ist die Zuführvorrichtung (60) auf der Grundlage von erfassten Wasserparametern und gespeicherten Wasserparametern zu steuern.

6. Trinkwassersystem gemäß einem der Ansprüche 1 bis 5, wobei die Durchlaufentkalkungsvorrichtung (1) ferner aufweist: eine Spül-/Regenerierungsleitung (6a), die hinter der Wasserentkalkungsvorrichtung (50) abzweigt und vor der Wasserentkalkungsvorrichtung (50) abzweigt.

7. Trinkwassersystem gemäß einem der vorhergehenden Ansprüche, ferner umfassend eine erste Rückführleitung (5), wobei die erste Rückführleitung den Verbraucheranschluss (3) mit dem Wasserreservoir (2) derart verbindet, dass nicht von einem Wasserverbraucher abgenommenes Wasser vom Wasserreservoir (2) über die Durchlaufentkalkungsvorrichtung (1) und die erste Rückführleitung (5) in das Wasserreservoir (2) zurückgeführt werden kann.

8. Trinkwassersystem gemäß einem der vorhergehenden Ansprüche, wobei die Durchlaufentkalkungsvorrichtung (1) stromabwärts des Wassereinlasses (10) eine Verzweigung (13) in einen ersten Wasserpfad (11) und einen zweiten Wasserpfad (12) aufweist, wobei der erste Wasserpfad (11) über die Zuführvorrichtung (60) mit dem ersten Wasserauslass (21) verbunden ist, und wobei der zweite Wasserpfad (12) über die Wasserentkalkungsvorrichtung (50) mit einem zweiten Wasserauslass (22) verbunden ist, wobei eine zweite Rückführleitung (6b) den zweiten Wasserauslass mit dem Wasserreservoir (2) derart verbindet, dass Wasser vom Wasserreservoir (2) über die Wasserentkalkungsvorrichtung (50) und die zweite Rückführleitung (6b) in das Wasserreservoir (2) zurückgeführt werden kann.

9. Trinkwassersystem gemäß einem der vorhergehenden Ansprüche, wobei die Durchlaufentkalkungsvorrichtung (1) bzw. die Wasserentkalkungsvorrichtung (50) in dem Trinkwassersystem (100) austauschbar ausgeführt ist.

10. Trinkwassersystem gemäß einem der vorhergehenden Ansprüche, mit einer Mehrzahl von Durchlaufentkalkungsvorrichtungen (1, 1a, 1b), wobei der Wassereinlass (10, 10a, 10b) von jeder der Mehrzahl von Durchlaufentkalkungsvorrichtungen (1, 1a, 1b) jeweils mit dem Wasserreservoir (2) verbunden ist und der erste Wasserauslass (21, 21a, 21b) jeweils von jeder der Mehrzahl von Durchlaufentkalkungsvorrichtungen mit jeweils einem Wasserverbraucheranschluss (3, 3a, 3b) verbunden ist.

11. Luftfahrzeug mit
einem Trinkwassersystem (100) gemäß einem der vorhergehenden Ansprüche, und
wenigstens einem Wasserverbraucher (4),
wobei der wenigstens eine Wasserverbraucher mit dem Verbraucheranschluss (3) verbunden ist.

## Claims

1. Drinking water system for an aircraft comprising
a through-flow descaling device (1) having
a water inlet (10),
a first water outlet (21),
a control device (30),
a water descaling device (50),
a voltage detection device or current detection device (36) for detecting a driving voltage or a driving current for operating the water descaling device (50), wherein the control device (30) is designed so as to signal that maintenance is required in the event of detecting a driving voltage or a driving current that is outside a predetermined threshold value range,
a water reservoir (2),
at least one consumer connection (3) for drawing off water,
wherein the water reservoir (2) is connected to the water inlet (10) of the through-flow descaling device (1), wherein the consumer connection (3) is connected to at least one water outlet (21) of the through-flow descaling device (1), and
wherein the water descaling device (50) is an electrolytic limescale separator.

2. Drinking water system according to claim 1,
wherein the through-flow descaling device (1) further comprises:
an detection device (40) for detecting water parameters in a water flow from the water inlet (10) to the at least one water outlet (21), wherein the water descaling device (50) is a controllable water descaling device, wherein the control device (30) is designed and configured in order to control the water descaling device (50) on the basis of at least one water parameter that is detected by the detecting device (40), wherein the detecting device (40) is designed so as to detect water parameters, in particular to detect at least one of the water parameters from the group consisting of:
- water hardness,
- water conductivity,
- water through-flow rate,
- water temperature,
- pH value.

3. Drinking water system according to any one of claims 1 and 2, wherein the control device (30) comprises a data storage device (35) that is designed so as to store predetermined water parameters, wherein the control device (30) is designed and configured in order to control the water descaling device (50) on the basis of at least one stored predetermined water parameter, wherein the at least one stored water parameter is in particular at least one water parameter from the group consisting of:
- water hardness,
- water conductivity,
- water through-flow rate,
- water temperature,
- pH value.

4. Drinking water system according to any one of claims 1 to 3, wherein the control device (30) is designed so as to set a voltage or a current below the threshold value in the event of detecting a voltage or a current above a predetermined threshold value in order to avoid an electrolysis of the water.

5. Drinking water system according to any one of claims 1 to 4, wherein the through-flow descaling device (1) further comprises:
an additive reservoir (65) and a supply device (60) that is designed so as to supply the water flow with an additive, wherein the additive reservoir (65) is connected to the supply device (60), wherein the supply device (60) in particular can be controlled and the control device (30) is designed so as to control the supply device (60) on the basis of detected water parameters and stored water parameters.

6. Drinking water system according to any one of claims 1 to 5, wherein the through-flow descaling device (1) further comprises: a rinsing line/regenerating line (6a) that branches downstream of the water descaling device (50) and upstream of the water descaling device (50).

7. Drinking water system according to any one of the preceding claims further comprising a first return line (5), wherein the first return line connects the consumer connection (3) to the water reservoir (2) in such a manner that water that is not drawn off by a water consumer can be returned from the water reservoir (2) by way of the through-flow descaling device (1) and the first return line (5) into the water reservoir (2).

8. Drinking water system according to any one of the preceding claims, wherein the through-flow descaling device (1) has a branching (13) downstream of the water inlet (10) into a first water path (11) and into a second water path (12), wherein the first water path (11) is connected by way of the supply device (60) to the first water outlet (21), and wherein the second water path (12) is connected by way of the water descaling device (50) to a second water outlet (22), wherein a second return line (6b) connects the second water outlet to the water reservoir (2) in such a manner that water can be returned from the water reservoir (2) by way of the water descaling device (50) and the second return line (6b) into the water reservoir (2).

9. Drinking water system according to any one of the preceding claims, wherein the through-flow descaling device (1) or the water descaling device (50) is embodied in the drinking water system (100) in such a manner that they can be exchanged.

10. Drinking water system according to any one of the preceding claims having a plurality of through-flow descaling devices (1, 1a, 1b), wherein the water inlet (10, 10a, 10b) is connected by each of the plurality of through-flow descaling devices (1, 1a, 1b) in each case to the water reservoir (2) and the first water outlet (21, 21a, 21b) in each case is connected by each of the plurality of through-flow descaling devices to in each case one water consumer connection (3, 3a, 3b).

11. Aircraft having
a drinking water system (100) according to any one of the preceding claims, and
at least one water consumer (4),
wherein the at least one water consumer is connected to the consumer connection (3).

## Revendications

1. Système d'eau potable pour un aéronef présentant :
un dispositif de détartrage en continu (1) comportant :
une entrée d'eau (10),
une première sortie d'eau (21),
un dispositif de commande (30),
un dispositif de détartrage d'eau (50),
un dispositif de détection de tension ou de courant (36) destiné à détecter une tension d'actionnement ou un courant d'actionnement pour actionner le dispositif de détartrage d'eau (50), le dispositif de commande (30) étant conçu pour signaler une maintenance nécessaire lorsqu'une tension d'actionnement ou un courant d'actionnement est détecté(e) à l'extérieur d'une plage de valeurs seuils prédéfini ;
un réservoir d'eau (2),
au moins un raccordement de consommateur (3) pour la prise d'eau,
dans lequel le réservoir d'eau (2) est relié à l'entrée d'eau (10) du dispositif de détartrage en continu (1),
dans lequel le raccordement de consommateur (3) est relié à au moins une sortie d'eau (21) du dispositif de détartrage en continu (1), et
dans lequel le dispositif de détartrage d'eau (50) est un séparateur de calcaire par électrolyse.

2. Système d'eau potable selon la revendication 1,
dans lequel le dispositif de détartrage en continu (1) présente en outre :
un dispositif de détection (40) destiné à détecter des paramètres d'eau dans un écoulement d'eau depuis l'entrée d'eau (10) jusqu'à au moins une sortie d'eau (21), dans lequel le dispositif de détartrage d'eau (50) est un dispositif de détartrage d'eau commandable, dans lequel le dispositif de commande (30) est conçu et agencé pour piloter le dispositif de détartrage d'eau (50) sur la base d'au moins un paramètre d'eau détecté par le dispositif de détection (40), dans lequel le dispositif de détection (40) destiné à détecter des paramètres d'eau est conçu en particulier pour détecter au moins un des paramètres d'eau dans le groupe composé de :
- une dureté de l'eau,
- une conductivité de l'eau,
- un débit de l'eau,
- une température de l'eau,
- une valeur pH.

3. Système d'eau potable selon une des revendications 1 et 2, dans lequel le dispositif de commande (30) présente une mémoire de données (35) qui est conçu pour mémoriser des paramètres d'eau prédéfinis, dans lequel le dispositif de commande (30) est conçu et agencé pour piloter le dispositif de détartrage d'eau (50) sur la base d'au moins un paramètre d'eau prédéfini mémorisé, dans lequel l'au moins un paramètre d'eau mémorisé est en particulier un paramètre d'eau dans le groupe composé de :
- une dureté de l'eau,
- une conductivité de l'eau,
- un débit de l'eau,
- une température de l'eau,
- une valeur pH.

4. Système d'eau potable selon une des revendications 1 à 3, dans lequel le dispositif de commande (30) est conçu, lorsqu'une tension ou un courant est détecté(e) au-dessus d'une valeur de seuil prédéfinie, pour régler respectivement une tension ou un courant en dessous de la valeur de seuil, afin d'éviter une électrolyse de l'eau.

5. Système d'eau potable selon une des revendications 1 à 4, dans lequel le dispositif de détartrage en continu (1) présente en outre :
un réservoir d'additif (65) et un dispositif d'alimentation (60) qui est conçu pour alimenter un additif dans l'écoulement d'eau, dans lequel le réservoir d'additif (65) est relié au dispositif d'alimentation (60), dans lequel le dispositif d'alimentation (60) est en particulier commandable et le dispositif de commande (30) est conçu pour commander le dispositif d'alimentation (60) sur la base de paramètres d'eau détectés et de paramètres d'eau mémorisés.

6. Système d'eau potable selon une des revendications 1 à 5, dans lequel le dispositif de détartrage en continu (1) présente en outre :
une ligne de rinçage / régénération (6a), qui est branchée derrière le dispositif de détartrage d'eau (50) et est branchée avant le dispositif de détartrage d'eau (50).

7. Système d'eau potable selon une des revendications précédentes, comprenant en outre une première ligne de retour (5), la première ligne de retour reliant le raccordement de consommateur (3) au réservoir d'eau (2) de telle sorte que l'eau non prélevée par un consommateur d'eau peut être retournée du réservoir d'eau (2) à travers le dispositif de détartrage en continu (1) et la première ligne de retour (5) jusque dans le réservoir d'eau (2).

8. Système d'eau potable selon une des revendications précédentes, dans lequel le dispositif de détartrage en continu (1) présente, en aval de l'entrée d'eau (10), un branchement (13) dans un premier trajet d'eau (11) et un second trajet d'eau (12), dans lequel le premier trajet d'eau (11) est relié à la première sortie d'eau (21) par l'intermédiaire du dispositif d'alimentation (60), etdans lequel le second trajet d'eau (12) est relié à une seconde sortie d'eau (22) par l'intermédiaire du dispositif de détartrage d'eau (50), dans lequel une seconde ligne de retour (6b) relie la seconde sortie d'eau au réservoir d'eau (2) de telle sorte que l'eau peut être retournée du réservoir d'eau (2) à travers le dispositif de détartrage d'eau (50) et la seconde ligne de retour (6b) jusque dans le réservoir d'eau (2).

9. Système d'eau potable selon une des revendications précédentes, dans lequel respectivement le dispositif de détartrage en continu (1) ou le dispositif de détartrage d'eau (50) est réalisé de manière remplaçable dans le système d'eau potable (100).

10. Système d'eau potable selon une des revendications précédentes, comportant une pluralité de dispositifs de détartrage en continu (1, 1a, 1b), dans lequel chaque entrée d'eau (10, 10a, 10b) de chacun de la pluralité de dispositifs de détartrage en continu (1, 1a, 1b) est reliée au réservoir d'eau (2) et chaque première sortie d'eau (21, 21a, 21b) de chacun de la pluralité de dispositifs de détartrage en continu est reliée à un raccordement de consommateur d'eau (3, 3a, 3b).

11. Aéronef comportant
un système d'eau potable (100) selon une des revendications précédentes, et
au moins un consommateur d'eau (4),
dans lequel l'au moins un consommateur d'eau est relié au raccordement de consommateur (3).
